# EUROPÄISCHE PATENTSCHRIFT

(11) **EP 0 519 204 B1**
(45) Veröffentlichungstag und Bekanntmachung des Hinweises auf die Patenterteilung: **06.09.1995**
(21) Anmeldenummer: 92108054.5
(22) Anmeldetag: 13.05.1992
(51) Int. Cl.: E04D 3/365, F16B 15/00

(54) **Metallhaft**
Metal connector
Elément de fixation métallique

(30) Priorität: 15.06.1991 DE 4119776
(43) Veröffentlichungstag der Anmeldung: 23.12.1992
(73) Patentinhaber: Jung, Dieter, D-73104 Börtlingen (DE)
(72) Erfinder: Jung, Dieter, D-73104 Börtlingen (DE)
(74) Vertreter: Rüger, Rudolf, Dr.-Ing.

(56) Entgegenhaltungen:
- DE-C- 722 223
- FR-A- 2 249 259
- FR-A- 2 552 503
- GB-A- 1 338 803
- US-A- 1 813 798
- US-A- 2 057 003
- US-A- 4 934 120

## Beschreibung

Wenn es darum geht, Gebäudeteile mit Blechteilen zu verwahren, so wird zunächst auf das entsprechende Gebäudeteil eine Holzunterkonstruktion aufgebracht. An dieser Holzunterkonstruktion wird die Blechverwahrung befestigt. Da die Holzunterkonstruktion und das Blech unterschiedliche thermische Ausdehnungskoeffizienten haben und auch das Holz im Gegensatz zum Metall einen Feuchtigkeitsgang aufweist, muß die Befestigung der Blechteile an der Unterkonstruktion die Ausdehungsunterschiede ausgleichen können. Um dies zu erreichen, wird die Blechverwahrung mit einem einfachen Falz oder Umbug versehen, in den ein Metallhaft eingreift. Der Metallhaft besteht aus einer rechteckigen Platte, die längs einer Kante ebenfalls mit einem Einfachfalz oder Umbug versehen ist, in dem die Blechverwahrung eingehängt werden kann. Der von dem Falz abliegende Teil des Metallhafts ist in der Regel mit, zwei oder mehr Löchern versehen, durch die hindurch der Metallhaft an der Unterkonstruktion festgenagelt wird. Der Nagelkopf legt sich dabei an der Oberseite des Metallhaftes an und verhindert ein Abrutschen.

Bei den kleinen Abmessungen eines Metallhafts spielen die unterschiedlichen Temperatur- und Feuchtebewegungen keine Rolle, während die große Blechverwahrung in dem Falz des Metallhaftes sich bewegen kann, wenn der Metallhaft der Bewegung der Holzunterkonstruktion folgt.

Es ist jedoch nicht immer einfach, beim Anbringen der Verwahrung gleichzeitig die Verwahrung, den Metallhaft, wenigstens einen Nagel und den Hammer zu halten.

In der DE-C-722 223 ist eine Halterung zur gemeinsamen Befestigung der Kehlrinne und des Abschlußbleches an der Dachhaut von Gebäuden beschrieben. Diese Halterung besteht im wesentlichen aus einer Z-förmig gekröpften Blechplatte, deren einer Teil mit Löchern versehen ist, durch die hindurch Nägel in die Holzunterkonstruktion des Daches eingeschlagen werden. Der abgekröpfte andere Teil verläuft parallel und im Abstand zu der Holzunterkonstruktion, so daß einerseits die Kehlrinne untergeschoben und andererseits die Unterkante der Dachhaut eingehängt werden kann.

Das Anbringen der Halterung ist deswegen einfacher als das Anbringen eines Hafts, weil beim Annageln die Halterung frei handhabbar ist und Blechverkleidungen nicht gleichzeitig mitgehalten werden müssen.

Zur Befestigung von Blechdächern mit Stehfalzen ist es aus der FR-PS 1 321 523 bekannt, einen Haft zu verwenden, bei dem der Halteabschnitt zur Befestigung an der Unterkonstruktion ausgeklinkte Laschen aufweist, die als Nagelschaft dienen. Der andere, hakenförmig umgebogene Abschnitt erstreckt sich rechtwinklig zu dem Halteabschnitt und ist an seiner von dem Halteabschnitt abliegenden Kante mit einem Umbug versehen. Dieser bekannte Haft ist bei seiner Anwendung allerdings auf die besagte Stehfalze beschränkt, weil nur hierbei beim Eintreiben der Nagelschäfte in die Holzunterkonstruktion keine seitliche Bewegung stattfindet, sondern der aufragende Abschnitt mit dem Umbug sich parallel zu dem Stehfalz bewegt, wenn die Nadelschäfte eingeschlagen werden.

Ausgehend hiervon ist es Aufgabe der Erfindung, einen Metallhaft zu schaffen, der keinen getrennt zu handhabenden Nagel erfordert und der auch zum Anbringen von Verwahrungen ohne Stehfalz geeignet ist.

Diese Aufgabe wird erfindungsgemäß durch den Metallhaft mit den Merkmalen des Anspruches 1 gelöst.

Bei dem neuen Metallhaft ist gleichsam der sonst lose Nagel an der Lasche gefesselt und kann von der Lasche in der zum Eintreiben mit dem Hammer günstigen Lage gehalten werden. Die Lasche ist hinreichend formstabil, um den anzunagelnden Schaft selbsttätig richtig zu positionieren.

Die Handhabung ist vereinfacht, weil bei gestreckter Lasche, die dann mit dem Halteabschnitt in einer gemeinsamen Ebene liegt, der Schaft senkrecht auf dieser Ebene steht und von jener Fläche wegweist, mit der der Haft auf der Holzunterkonstruktion aufgelegt wird. Durch einfaches halbkreisförmiges Biegen der Lasche wird der Schaft auf die Öffnung in dem Halteabschnitt ausgerichtet. Die Lasche steht dabei mit ihrem dem Schaft unmittelbar benachbarten Abschnitt etwa rechtwinklig zu dessen Längsachse, was die Gefahr vermindert, daß der Schaft beim Einschlagen mit dem Hammer ausknickt oder schief eingeschlagen wird.

Besonders einfach werden die Herstellungsverhältnisse, wenn die Lasche und der Schaft einstückig zusammengehören, weil dadurch zusätzliche Fügevorgänge entbehrlich sind. Außerdem ist kein zusätzliches Material notwendig, um die Teile aneinander zu haltern. Eine weitere Vereinfachung ergibt sich, wenn der Metallhaft und auch die Lasche einstückig sind, da dann der Metallhaft samt Lasche oder Laschen und mit noch auszuformenden Schäften als Blechteil ausgestanzt werden kann.

Der Schaft ist vorzugsweise ein Hohlformteil, das etwa eine röhrenförmige Gestalt hat. Dabei muß die röhrenförmige Gestalt nicht vollständig ausgeprägt sein, es genügt, wenn der Schaft über einen Winkel von größer als 180° geschlossen ist. Die Stabilität des Schaftes gegen Ausknicken ist vollkommen ausreichend.

Es ist aber denkbar, das Hohlformteil im Querschnitt etwa V-förmig auszuführen und an einer Seite vollständig offen zu lassen. Auch in diesem Falle wird eine ausreichende Knicksteifigkeit selbst bei dünnem Material erreicht.

Die radial über das betreffende Ende des Schaftes überstehende Lasche fixiert zuverlässig den Halteabschnitt auf dem Schaft, wenn dieser in die Holzunterkonstruktion eingeschlagen ist.

Die Haltekraft des Schaftes in der Unterkonstruktion wird verbessert, wenn der Schaft außen nicht glatt ist. Eine solche nicht glatte Oberflache läßt sich bspw. durch auf der Außenseite verteilt angeordnete Ausbuchtungen erreichen, wodurch die Ausziehkraft des Schaftes aus dem Holz deutlich erhöht wird. Die Ausbuchtungen können dabei sowohl einzelne Noppen sein, als auch Wulste, die in Umfangsrichtung um den Schaft herumliegen. Zweckmäßigerweise sind die Ausbuchtungen nur Ausprägungen, bei denen jedoch das Material des Schaftes nicht durchgeschnitten ist. Hierdurch ergibt sich für die Ausbuchtungen die größte Festigkeit gegenüber zurückdrücken, so daß sie am zuverlässigsten ihre Haltefunktion im Holz erfüllen können.

Das Eintreiben des Schaftes in die Holzunterkonstruktion und das Klemmen wird verbessert, wenn der Schaft an seinem von der Lasche abliegenden Ende mit einer Schneide versehen oder zugespitzt ist. Beim Eintreiben in das Holz wird durch die Spitze bzw. die Schneide das Holz geteilt und nicht vor der Stirnseite des Schaftes hergeschoben. Das seitliche verdrangen des Holzes erhöht die Haftreibung des Schaftes im Holz.

Die den Schaft tragende oder ihn letztlich ausbildende Lasche kann bei einem rechteckigen Halteabschnitt des Metallhafts sowohl an der langen als auch an der kurzen Kante ausgeformt sein.

Die neue Gestaltung des Metallhaftes ermöglicht auch die Verwendung eines zunächst einmal getrennten handelsüblichen Nagels, der in unlösbarer Weise mit dem Metallhaft verbunden wird. Zu diesem Zweck enthält die Lasche eine Öffnung, in die der Nagel mit seinem Schaft eingesteckt wird. Diese Öffnung ist in ihrer lichten Weite kleiner als es dem Durchmesser des Nagelschaftes entspricht. Dadurch wird der Nagel von den Lochrändern festgehalten.

Eine besonders gute Führung des Nagels wird erreicht, wenn auch in dem Befestigungsabschnitt die Löcher eine lichte Weite haben, die etwas geringer ist als es dem Durchmesser des Nagelschaftes entspricht. Sobald der Nagelschaft durch beide Löcher eingesteckt ist, hält er außerdem die Lasche in der richtigen Position bzw. wird von der Lasche in der senkrechten Stellung, bezogen auf den Halteabschnitt, festgehalten. Wenn dabei die Spitze des Nagels ein kleines Stück über den Halteabschnitt hinaussteht, so hat dies keine nachteilige Wirkung, weil der Halteabschnitt dadurch nur um weniger als höchstens 2 mm angehoben wird, so daß eine Verkürzung aufgrund einer Schrägstellung des Haftes und eine daraus resultierende Relativbewegung gegenüber der Unterkonstruktion nicht zustandekommt.

Das Einsetzen und Halten des Nagels in den Löchern ist sehr zuverlässig, wenn die Löcher einen geschlitzten Rand aufweisen, damit- sich eine Art Krallenfeder ergibt, wie sie auch als Wellensicherung zur Anwendung kommt. Anstelle des eingeschnittenen Randes ist es aber auch denkbar, die Löcher mit nach innen vorstehenden kleinen Fortsätzen, also etwa sternförmig, zu gestalten, wobei die nach innen weisenden Zacken den Nagelschaft ergreifen. In keinem Falle wird durch die Halteeinrichtungen an den Lochrändern das Eintreiben des Nagels in die Unterkonstruktion behindert.

In der Zeichnung sind Ausführungsbeispiele des Gegenstandes der Erfindung dargestellt. Es zeigen:
- Fig. 1: den Metallhaft zusammen mit einer von ihm gehalterten Blechverwahrung über einer Holzunterkonstruktion, in perspektivischer abgebrochener Darstellung,
- Fig. 2: den Metallhaft nach Fig. 1 in seiner Ausgangsform,
- Fig. 3: einen der in die Unterkonstruktion einzutreibenden Schäfte zusammen mit einem Stück der zugehörigen Lasche in perspektivischer Darstellung,
- Fig. 4: ein anderes Ausführungsbeispiel des Metallhaftes mit noch gestreckten Laschen, in einer perspektivischen Darstellung und
- Fig. 5: den Metallhaft nach Fig. 4 im fertig gebogenen Zustand mit eingesetztem Nagel in einer Seitenansicht.

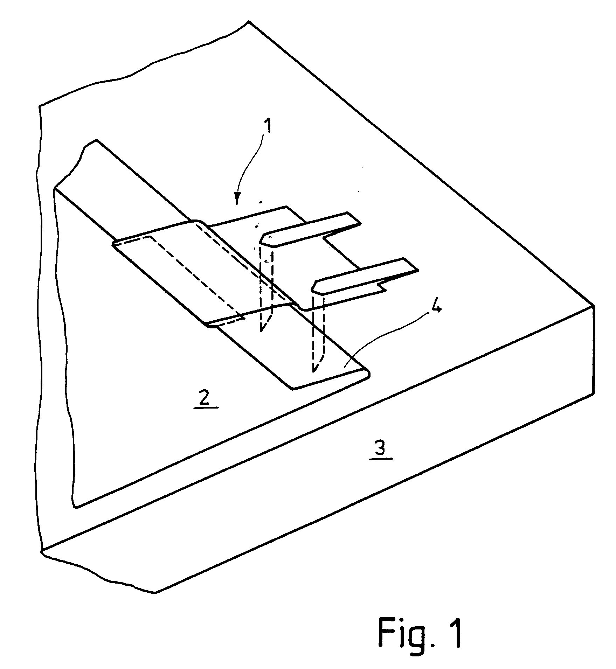

Fig. 1 zeigt einen Metallhaft 1 der dazu dient, eine Bekleidung aus Blech, beispielsweise eine Blechverwahrung 2 an einer Holzunterkonstruktion 3 zu befestigen. Die Blechverwahrung 2 ist mit einem Umbug oder einfachen Falz 4 versehen, der von der Holzunterkonstruktion 3 weg weist und in dem die Blechverwahrung in dem Metallhaft 1 hakenförmig und somit formschlüssig eingehängt ist.

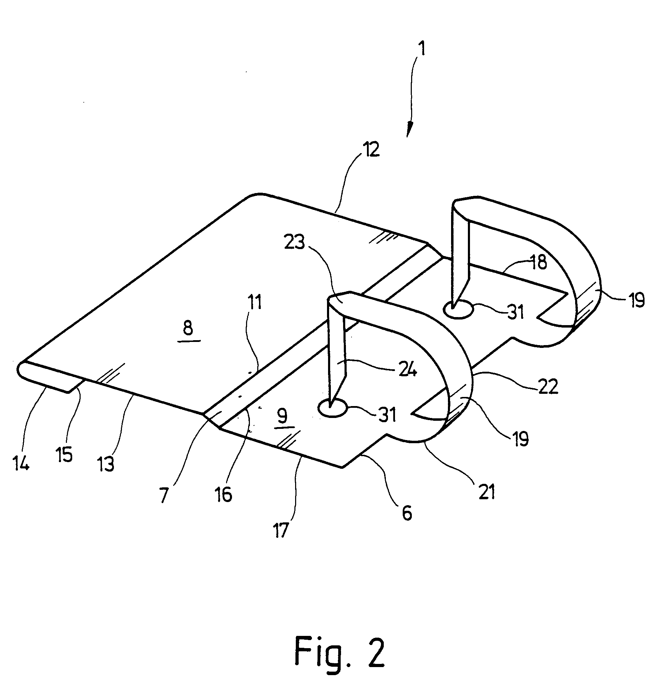

Der Metallhaft 1 hat vor seiner Verwendung die in Fig. 2 gezeigte Gestalt. Er besteht aus einem rechteckigen dünnen Blechzuschnitt, dessen Materialstärke ca. 0,5 - 0,7 mm beträgt. Der Blechzuschnitt ist im Abstand zu einer Kante 6 mit einer schmalen Abkröpfung 7 versehen, die den Blechzuschnitt in zwei ebenfalls rechteckige Abschnitt 8 Und 9 aufteilt. Der Abschnitt 8 ist längs einer seiner langen Kanten 11 von der Abkröpfung 7 begrenzt, die rechtwinklig zu seinen beiden kurzen seitlichen Kanten 12 und 13 verläuft. Im Abstand von der langen Kante 11 ist der Abschnitt 8 mit einem nach unten um 180° umgeschlagenen Falz 14 versehen, so daß seine andere lange Kante 15 unter dem Abschnitt 8 zu liegen kommt. In den Falz 14 wird im Gebrauch, wie Fig. 1 zeigt, der Falz 4 der Blechverwahrung 2 eingehängt.

Der Abschnitt 9 bildet den Halteabschnitt, mit dem der Metallhaft 1 an der Unterkonstruktion 3 aufliegt. Der Halteabschnitt 9 weist vier paarweise zueinander parallele Kanten 6, 16, 17, 18 auf, wobei die Kanten 17 und 18 abgesehen von der Abkröpfung in Richtung parallel zu den Kanten 12 und 13 liegen.

An der langen Kante 6 sind zwei bandförmige Laschen 19 ausgebildet die einstückig in den Halteabschnitt 9 an der Kante 6 übergehen. Die beiden Laschen 19, die längs der Kante 6 im Abstand voneinander angeordnet sind sind untereinander gleich, weshalb es ausreicht, im folgenden eine von ihnen zu beschreiben; die einander entsprechenden Teile der beiden Laschen 19 sind jeweils mit dem selben Bezugszeichen versehen.

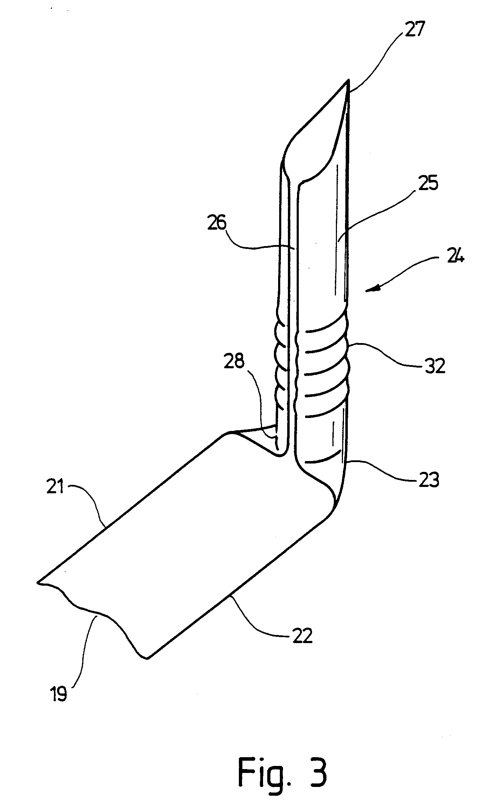

Die Lasche 19 ist seitlich von zwei zueinander parallelen Rändern 21, 22 begrenzt, und wie Fig. 2 zeigt, etwa halbkreisförmig gebogen. An ihren freien von der Kante 6 abliegenden distalen Ende 23 ist das Material der Lasche 19 zu einem Hohlformteil umgeformt. Das Hohlformteil 19 bildet einen rechtwinklig zu dem angrenzenden Teil der Lasche 19 wegstehenden Schaft 24, der in die Holzunterkonstruktion 3 wie ein Nagel eintreibbar ist. Die Gestaltung des Schaftes ergibt sich im einzelnen aus Fig. 3. Wie dort ersichtlich, ist beginnend ab derjenigen Stelle, die später das Ende 23 bildet das Material der Lasche 19 zu einem Röhrchen 25 gerollt, wobei entweder die in Längsrichtung des Röhrchens 25 verlaufenden Kanten 21, 22 einander überlappen oder unter Ausbildung eines über die Länge des Röhrchens 25 durchgehenden Schlitz 26 einander gegenüberstehen. Die Länge des Röhrchens 25 beträgt ca. 20 mm und es läuft an seinen Ende in einer Spitze 27 aus. Die Spitze 27 hat die Gestalt eines angeschnittenen Federkiels.

Nach dem Erzeugen des Röhrchens 25 wird es unmittelbar an seiner Wurzel 28 auf den unverformten Teil der Lasche 19 umgebogen, wie dies Fig. 3 zeigt. Das Umbiegen erfolgt mit der Klapprichtung, die anschließend das Rohrchen 25, wie in Fig. 3 dargestellt, auf der Lasche 19 stehen läßt, die dadurch im Bereich des Endes 23 ein Stück weit radial über das Röhrchen 25 übersteht. Durch das Einrollen und Umbiegen des Materials der Lasche 19 entsteht im Bereich des Endes 23 zwischen der Lasche 19 und dem Röhrchen 25 eine etwa dreieckförmige Tasche d.h. das freie Ende 23 läuft dreieckförmig aus, wobei die entstehende Spitze einen Rundungsradius entsprechend dem Durchmesser des Röhrchens 25 von ca. 3 mm aufweist.

Der so aus dem Röhrchen 25 gebildete hohle Schaft 24 ist damit einstückiger Bestandteil der Lasche 19 und aus einem Teil der Lasche durch Umformen hervorgegangen.

Damit nach dem halbkreisförmigen Biegen der Lasche 19, die in Fig. 2 gezeigt, Konfiguration entsteht, ragt, wenn die Lasche 19 noch nicht gebogen ist und somit in derselben Ebene wie der Halteabschnitt 9 liegt, der Schaft 24 in dieselbe Richtung, in die auch die Oberseite des Halteabschnittes 9 zeigt, die in Fig. 2 sichtbar ist.

Damit der Schaft 24 in die Holzunterkonstruktion 3 eingetrieben werden kann, enthält der Halteabschnitt 9 entsprechend der Anzahl der Schäfte 24 kreisrunde Öffnungen 31, die zwischen den Kanten 6 und 16 auf einer gedachten Verlängerung der Lasche 19 in dem Halteabschnitt 9 liegen. Wenn unter diesen Umständen die Lasche 19, wie gezeigt, halbkreisförmig in Richtung auf die Oberseite des Metallhaftes 1 hochgebogen wird, fluchtet die Spitze 27 jedes Schaftes 24 mit der zugehörigen Öffnung 31, und der Schaft 24 steht senkrecht mit seiner Längsachse auf der von dem Halteabschnitt 9 definierten Ebene. Die Lasche 19 bildet eine gerade unverwundene Fläche.

Bei der Verwendung des neuen Metallhafts 1 wird der Falz 14 in den Falz 4 der Blechverwahrung 2 eingehängt und sodann der Metallhaft mit der Unterseite seines Halteabschnittes 4, die in Fig. 2 vom Betrachter weg weist, auf die Holzunterkonstruktion 3 aufgelegt. Anschließend wird mit Hilfe eines Hammers der Schaft 24 in die Holzunterkonstruktion 3 wie ein Nagel eingetrieben, bis die Lasche 19 flach auf der Oberseite des Halteabschnitts 9 aufliegt. Das gleiche geschieht mit der zweiten Lasche 19 bzw. dem zweiten Schaft 24.

Da der Durchmesser jeder der beiden kreisrunden Öffnungen 31 nur geringfügig größer ist als der Außendurchmesser des Schaftes 24, liegt der Metallhaft 1 bezüglich der radialen Richtung des Schaftes 24 mit geringem Spiel fest. In axialer Richtung wird er einerseits durch die Holzunterkonstruktion 3 und andererseits durch die Lasche 19 gehalten, die einstückig bei 23 in den Schaft 24 übergeht.

Beim Einschlagen des Schaftes 24 verformt sich die Lasche 19 und verhindert dadurch ein schiefes Eintreiben des Schaftes 24 in die Unterkonstruktion 3. Anschließend kann die Lasche 19, wie in Fig. 1 gezeigt, vollständig flachgeschlagen werden, um nicht aufzutragen.

Die röhrchenförmige Gestalt des Schaftes 24 verhindert weitgehend ein Ausknicken, wenn der Kopf des Schaftes 24 gebildet durch das freie Ende 23 der Lasche 19 mit dem Hammer bearbeitet wird.

Damit die Haftreibung des Schaftes 24 in der Holzunterkonstruktion 3 die Normvorschriften hinsichtlich der vorgeschriebenen Auszugswerte erfüllt, kann das freie Ende 27 des Schaftes 24 mit einer schneide versehen werden, die beim Eintreiben des Schaftes 24 das Holz zur Seite drängt und nicht vor sich herschiebt. Außerdem kann die schneide unsymmetrisch sein, was zu einem Verformen des freien Endes 27 führt, und folglich zu einer weiteren Erhöhung der Auszugswerte für den Schaft 24. Schließlich besteht die Möglichkeit, die Auszugswerte dadurch zu verbessern, daß die Außenseite des Schaftes 24 nicht glatt ist, sondern mit Ausbuchtungen versehen ist. Ein Ausführungsbeispiel solcher Ausbuchtungen zeigt Fig. 3.

Der röhrchenförmige Schaft 24 trägt zumindest in der Nähe seines oberen Endes, d.h. seiner Wurzel 28 mehrere in Umfangsrichtung liegende flache Wülste 32, die auf der Außenseite eine Wellenkontur, bezogen auf die Längsrichtung des Schaftes 24 entstehen lassen. Es besteht aber auch die Möglichkeit, einzelne, nach außen vorstehende Noppen einzuprägen. Diese Verformungen des Materials für den Schaft 24 werden vor dem Umformen des Materials zu dem Röhrchen 25 ausgeführt.

Abweichend von den Darstellungen in den Figuren braucht der Schaft 24 nicht, wie gezeigt, von einem geraden zylindrischen Röhrchen 25 gebildet zu sein, sondern es sind auch andere Querschnittsformen möglich. So kann sich das Röhrchen 25 ausgehend von der Wurzel 28 bis hin zu der Spitze 27 geringfügig konisch erweitern, was beim Eintreiben zu einem Aufweiten und damit verbesserten Haltewerten führt. Der Öffnungswinkel braucht hierzu kaum weniger als 1° zu betragen. Außerdem kann anstelle der röhrchenförmigen Ausführung bspw. auch eine rinnenförmige Querschnittsgestalt in Frage kommen. Der Schaut 24 sieht dabei aus wie eine V-förmige Rinne, die in Richtung der Lasche zu der Kante 6 offen ist.

Bei allen Ausführungsformen braucht nicht, wie dies sonst der Fall war, der Nagel, mit dem der Metallhaft an der Unterkontruktion befestigt wurde, gehalten zu werden. Es genügt, den Metallhafts selbst und die Blechverwahrung gegen die Unterkonstruktion zu drücken. Die etwa halbkreisförmig gebogene Lasche 19 hält zwangsläufig den Schaft 24 in der zum Einschlagen richtigen Position, in der die Spitze 27 mit der zugehörigen Öffnung 31 fluchtet und der Schaft 24 auf der Holzunterkonstruktion 3 senkrecht steht.

Die Anzahl von zwei Laschen 19 und zwei zugehörigen Schäften 24 ist nicht zwingend. Es können auch mehr sein, oder wenn dies die Sicherheitsvorschriften zulassen auch nur ein Schaft 24 mit einer Lasche 19. Ebenso ist es möglich, die Lasche 19 nicht von der langen Kante 6, sondern von der benachbarten kurzen Kante 17 oder 18 ausgehen zu lassen, oder auch eine gemischte Anordnung zu wählen, je nach dem was unter dem Gesichtspunkt der günstigeren Stanzabfälle zweckmäßiger ist, da die Kontur des Metallhafts 1 einschließlich des Materials für die Laschen 19 und der Schäfte 24 ein einziger Zuschnitt ist.

Schließlich kann sich die Lasche 19 etwa von der Mitte aus in Richtung auf das Ende 23 verbreitern.

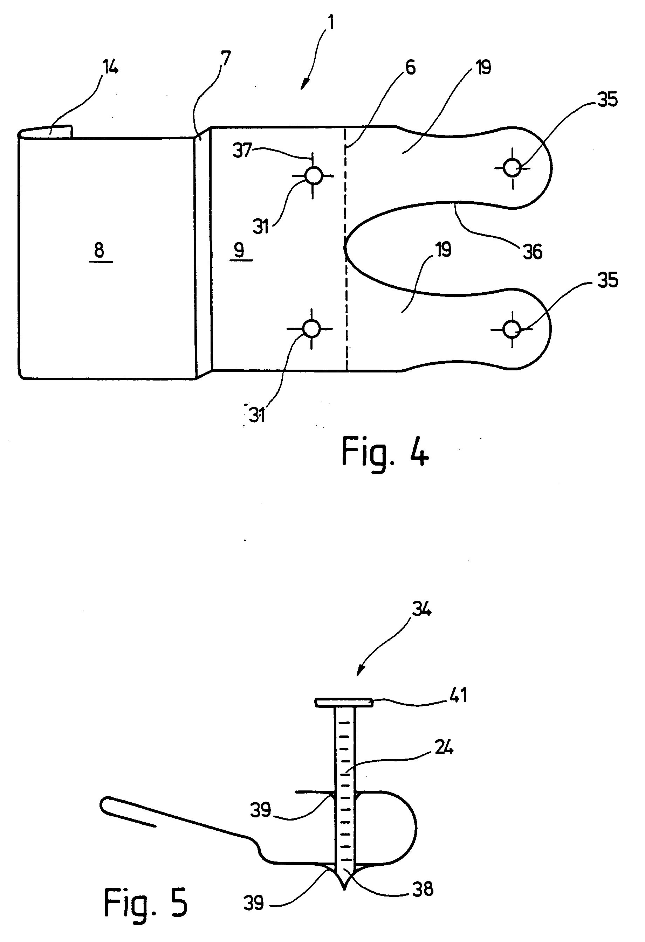

In den Fig. 4 und 5 ist ein anderes Ausführungsbeispiel des Metallhaftes 1 gezeigt, bei dem der zum Annageln dienende Nagelschaft von einem üblichen, ursprünglich getrennten Nagel 34 gebildet ist. Auch der Metallhaft 1 nach den Fig. 4 und 5 besteht aus einem an der Unterkonstruktion anzunagelnden Abschnitt 9 , der über die Abkröpfung 7 in den Abschnitt 8 übergeht, der an seiner von der Abkröpfung 7 entfernt liegenden Kante mit dem um 180° umgeschlagenen Falz oder Umbug 14 versehen ist.

Wie bei dem vorhergehenden Ausführungsbeispiel weist der Halteabschnitt 9 an seinem von der Abkröpfung 7 entfernt liegenden Ende zwei Laschen 19 auf, die an ihren freien Enden mit Löchern 35 versehen sind. Die beiden Laschen 19 sind zueinander spiegelbildlich und etwa in der Mitte zwischen ihrem freien Ende und der gestrichelt angedeuteten, gedachten Kante 6 des Halteabschnittes 9 mit einer Einschnürung oder Verjüngung 36 versehen, so daß dort eine Materialschwachung auftritt. Im Bereich dieser Verjüngung oder Einschnürung 36 soll sich beim Befestigen des Metallhaftes 1 die betreffende Lasche 19 bevorzugt durchbiegen, um bei der beim Einschlagen des Nagelschaftes auftretenden Verformung der Lasche 19 den Nagelschaft nicht seitlich wegzudrücken.

Die in dem Halteabschnitt 9 vorhandenen beiden Löcher 31 entsprechen im Durchmesser den Löchern 35 und es sind alle diese Löcher 31,35 in ihrem Rand mit jeweils insgesamt vier Einschnitten 37 versehen, die es dem Lochrand ermöglichen, ähnlich einer Krallenfeder, nachzugeben, wenn in das Loch 31 bzw. 35 ein Gegenstand eingestoßen wird, dessen Außendurchmesser geringfügig größer ist als die lichte Weite der Löcher 31 und 35.

Vor der Verwendung des insoweit beschriebenen Metallhaftes 1 werden entweder bereits werkseitig oder durch den Monteur vor Ort die Laschen 19 über ihre Breitseite, also die in Fig. 4 sichtbare Seite, halbkreisförmig zurückgebogen, bis die beiden Löcher 31 und 35,die jeweils einer Lasche 19 zugeordnet sind, koaxial zu einer gemeinsamen Geraden liegen, die senkrecht auf der Fläche des Halteabschnittes 9 steht. Damit wird die in Fig. 5 gezeigte Seitenansicht erreicht. Sodann wird von dem Loch 35 her der Nagel 34 mit seiner Spitze 38 voraus eingestoßen, bis die Spitze 38 ein Stück weit nach unten aus dem Loch 31 vorsteht. Der Nagelschaft 24 des Nagels 34 wird dadurch an zwei längs des Nagelschaftes 24 voneinander beabstandeten Stellen seitlich gehalten, damit er die bezüglich des Halteabschnittes 9 senkrechte Stellung beibehält.

Der Außendurchmesser des Nagelschaftes 24 ist geringfügig größer als es der lichten Weite der Löcher 31 und 35 entspricht, so daß die Ränder der Löcher 31 und 35 infolge der Einschnitte 37 geringfügig in Richtung auf die Spitze 38 verbogen werden, wie dies in Fig. 5 bei 39 übertrieben veranschaulicht ist. Infolge dieser Verformung ergibt sich für den Nagel 34 ein Schutz gegen Herausziehen entgegen der Richtung der Spitze 38, während ein weiteres Durchtreiben des Nagels 34 durch die Löcher 31 und 35 nur sehr geringe Kraft erfordert. Die Lochränder weichen einer solchen Bewegung aus, während sie der entgegengesetzten Bewegungsrichtung erheblichen Widerstand entgegensetzen, da sie sich in dem Nagelschaft 24 verkrallen.

Die Handhabung des Metallhaftes 1 nach den Fig. 4 und 5 geschieht im übrigen genauso, wie dies im Zusammenhang mit dem Metallhaft 1 nach den Fig. 1 bis 3 beschrieben ist. Beim Eintreiben des Nagels 34 wird sein Nagelschaft 24 von der betreffenden Lasche 19 in Verbindung mit den Löchern 31 und 35 präzise geführt. Sobald sein Kopf 41 mit dem freien Ende der Lasche 19 in Berührung kommt, wird beim weiteren Einschlagen des Nagels 34 die Lasche 19 allmählich flachgedrückt, wobei sie an der Einschnürungsstelle 36 ausknickt.

Der Metallhaft 1 nach den Fig. 4 und 5 hat den Vorteil, daß handelsübliche, für die Anbringung von Bekleidungen aus Blech zugelassene und typgeprüfte Nägel Verwendung finden können. Eine besondere Bauartzulassung ist nicht erforderlich. Die handelsüblichen Nägel stellen die ausreichende Auszugsfestigkeit aus der Unterkonstruktion sicher. Andererseits wird bei der Verwendung des neuen Metallhaftes 1 der Nagel 34 einwandfrei geführt, so daß ein schräges Eindringen in die Unterkonstruktion weitgehend ausgeschlossen ist. Nachdem der Nagel 34 weitgehend eingeschlagen ist, ist die Lasche 19 wirkungslos und es ergibt sich letztendlich eine Verbindung mit der Unterkonstruktion, wie sie auch bei Metallhaften nach dem Stand der Technik erhalten wird.

Bei einer bevorzugten Ausführungsform beträgt der Durchmesser der Löcher 31 und 35 ca. 2 mm, während der Nagelschaft 24 einen Durchmesser von 2,5 mm hat. Das Material für den Metallhaft 1 ist ein 0,4 mm starker Edelstahl.

Bei der Vorbereitung des Metallhaftes 1 werden die Nägel 34 so weit eingestoßen, bis ihre Spitze 38 ca. 2 mm aus dem Loch 31 herausschaut.

Die neue Lösung ist nicht auf solche Haft beschränkt, bei denen der Abschnitt 8 etwa parallel zu dem Halteabschnitt 9 verläuft. Sie ist auch bei Haften anwendbar, bei denen diese beiden Abschnitte rechtwinklig zueinander verlaufen, beispielsweise wenn Bekleidungen mit Stehfalzen zu befestigen sind.

## Patentansprüche

1. Metallhaft (1) zum Haltern von Bekleidungen aus Metall, insbesondere von Verwahrungen (2),an Holzunterkonstruktionen (3),
mit einem Halteabschnitt (9) zum Anbringen des Metallhaftes (1) an der Unterkonstruktion (3),
mit einem mit dem Halteabschnitt (9) verbundenen Abschnitt (8), der formschlüssig mit der Bekleidung (2) in Eingriff zu bringen ist, um die Bekleidung (2) an der Holzunterkonstruktion (3) zu halten,
mit wenigstens einem in den Halteabschnitt (9) enthaltenen Loch (31) zum Durchtritt eines in die Unterkonstruktion (3) einzuschlagenden Nagelschaftes (24) sowie
mit wenigstens einer mit dem Halteabschnitt (9) verbundenen Lasche (19), die halbkreisförmig über ihre Flachseite gebogen bzw. zu biegen ist und die zum Halten des Nagelschaftes (24) dient.

2. Metallhaft nach Anspruch 1, dadurch gekennzeichnet, daß der Nagelschaft (24) unlösbar mit der Lasche (19) verbunden ist.

3. Metallhaft nach Anspruch 1, dadurch gekennzeichnet, daß zwei Laschen (19) vorgesehen sind, von denen jede unlösbar einen als Nagel dienenden Nagelschaft (24) trägt.

4. Metallhaft nach Anspruch 1, dadurch gekennzeichnet, daß der Schaft (24) und die Lasche (19) einstückig miteinander verbunden sind.

5. Metallhaft nach Anspruch 1, dadurch gekennzeichnet, daß die wenigstens eine Lasche (19) mit dem Halteabschnitt (9) einstückig ist.

6. Metallhaft nach Anspruch 1, dadurch gekennzeichnet, daß bei gestreckter Lasche (19), die mit dem Halteabschnitt (9) in einer gemeinsamen Ebene liegt, der Nagelschaft (24) in eine Richtung weist, die von derjenigen Seite des Halteabschnittes (9) weg zeigt, mit der er bei der Befestigung der Verwahrung (2) auf der Unterkonstruktion (3) aufliegt.

7. Metallhaft nach Anspruch 1, dadurch gekennzeichnet, daß der Nagelschaft (24) ein Hohlformteil (25) ist.

8. Metallhaft nach Anspruch 1, dadurch gekennzeichnet, daß der Nagelschaft (24) rohrförmige Gestalt hat.

9. Metallhaft nach Anspruch 7, dadurch gekennzeichnet, daß der als Hohlformteil (25) ausgebildete Nagelschaft (24) einen über seine gesamte Länge durchgehenden Schlitz (26) aufweist.

10. Metallhaft nach Anspruch 1, dadurch gekennzeichnet, daß die Lasche (19) an ihrer Übergangstelle (28) zu dem Nagelschaft (24) zumindest in einem begrenzten Bereich radial seitlich über den Nagelschaft (24) übersteht.

11. Metallhaft nach Anspruch 1, dadurch gekennzeichnet, daß der Nagelschaft (24) an seiner Außenseite nicht glatt ist.

12. Metallhaft nach Anspruch 11, dadurch gekennzeichnet, daß der Nagelschaft (24) an seiner Außenseite eine Vielzahl von Ausbuchtungen (32) trägt.

13. Metallhaft nach Anspruch 12, dadurch gekennzeichnet, daß die Ausbuchtungen von nebeneinanderliegenden Wülsten (32) gebildet sind, die längs zumindest eines Abschnittes des Schaftes (24) äquidistant verteilt nebeneinander liegen und sich in Umfangsrichtung des Schaftes (24) erstrecken.

14. Metallhaft nach Anspruch 12, dadurch gekennzeichnet, daß die Ausbuchtungen von einer Vielzahl regelmäßig oder unregelmäßig verteilter, nach außen vorstehender Noppen gebildet sind, die zumindest in einem Bereich des Schaftes (24) ausgeprägt sind.

15. Metallhaft nach Anspruch 12, dadurch gekennzeichnet, daß die Ausbuchtungen (32) Ausprägungen sind.

16. Metallhaft nach Anspruch 1, dadurch gekennzeichnet, daß der Nagelschaft (24) an seinem die Spitze (17) bildenden Ende mit einer Schneide versehen ist.

17. Metallhaft nach Anspruch 1, dadurch gekennzeichnet, daß der Nagelschaft (24) an seinem von der Lasche (19) abliegenden Ende (27) zugespitzt ist.

18. Metallhaft nach Anspruch 17, dadurch gekennzeichnet, daß die Spitze (27) außermittig bezüglich der Längsachse des Nagelschaftes (24) liegt.

19. Metallhaft nach Anspruch 1, dadurch gekennzeichnet, daß der Halteabschnitt (9) die Gestalt einer rechteckigen Platte hat.

20. Metallhaft nach Anspruch 19, dadurch gekennzeichnet, daß der Halteabschnitt (9) mit dem zur Anbringung der Verwahrung (2) dienenden Abschnitt (8) einstückig längs einer seiner langen Kante (16) verbunden ist, und daß die wenigstens eine Lasche (19) an einer gegenüberliegenden langen Kante (6) vorgesehen ist.

21. Metallhaft nach Anspruch 19, dadurch gekennzeichnet, daß die wenigstens eine Lasche (19) von einer kurzen Seite (17, 18) des Halteabschnitts (9) ausgeht.

22. Metallhaft nach Anspruch 1, dadurch gekennzeichnet, daß der Nagelschaft (24) von einem ursprünglich getrennten Nagel (34) mit Kopf (41), Nagelschaft (24) und Spitze (38) gebildet ist, der unlösbar an dem Metallschaft (1) gehalten ist.

23. Metallhaft nach Anspruch 22, dadurch gekennzeichnet, daß die jeweils zugehörige Lasche (19) zur Halterung des Nagels (34) ein Loch enthält, in dem der Nagel (34) mit seinem Nagelschaft (24) steckt.

24. Metallhaft nach Anspruch 23, dadurch gekennzeichnet, daß die lichte Weite des Loches (35) in der betreffenden Lasche (19) kleiner ist als es dem Außendurchmesser des Nagelschaftes (24) entspricht.

25. Metallhaft nach Anspruch 24, dadurch gekennzeichnet, daß das Loch (35) in der betreffenden Lasche (19) in seinem Rand mit Einschnitten (37 versehen ist, durch die das Loch (35) nachgiebig aufweitbar ist.

26. Metallhaft nach den Ansprüchen 23, 24 oder 25, dadurch gekennzeichnet, daß das zugehörige Loch (31) in dem Halteabschnitt (9) im Durchmesser ebenfalls kleiner ist als der Durchmesser des Nagelschaftes (24) und daß das Loch (31) gegebenenfalls an seinem Rand mit Einschnitten (37) versehen ist, durch die das Loch (31) elastisch aufweitbar ist.

27. Metallhaft nach Anspruch 23, dadurch gekennzeichnet, daß jede Lasche (19) derart gebogen ist, daß das Loch (35) der Lasche (19) und das zugehörige Loch (31) des Halteabschnittes (9) koaxial zu einer Geraden sind, die senkrecht auf einer durch den Halteabschnitt (9) definierten Ebene steht.

28. Metallhaft nach Anspruch 1, dadurch gekennzeichnet, daß die Lasche (19) mit einer Sollbiegestelle (36) versehen ist.

29. Metallhaft nach Anspruch 28, dadurch gekennzeichnet, daß die Sollbiegestelle von einer seitlichen Einschnürung (36) der Lasche (19) gebildet ist.

## Claims

1. Metal staple (1) for mounting metal linings, in particular of flashings (2), on wooden substructures (3),
having a holding section (9) for attachment of the metal staple (1) to the substructure (3),
a section (8) connected to the holding section (9) which is to be positively engaged with the lining (2) in order to hold the lining (2) on the wooden substructure (3),
at least one hole (31) provided in the holding section (9) for insertion of a nail shaft (24) to be hammered into the substructure (3), as well as at least one clip (19) connected to the holding section (9) to be curved or bent over its flat side in the shape of a semicircle and to hold the nail shaft (24).

2. Metal staple according to Claim 1, characterised in that the nail shaft (24) is undetachably connected to the clip (19).

3. Metal staple according to claim 1, characterised in that two clips (19) are provided, each of which undetachably supporting a nail shaft (24) acting as a nail.

4. Metal staple according to Claim 1, characterised in that the shaft (24) and the clip (19) are integrally connected to one another.

5. Metal staple according to Claim 1, characterised in that the at least one clip (19) is integral to the holding section (9).

6. Metal staple according to Claim 1, characterised in that when the clip (19) lying in a common plane with the holding section (9) is extended, the nail shaft (24) points in one direction facing away from that side of the holding section (9) on which it lies on the substructure (3) when the flashing (2) is being secured.

7. Metal staple according to Claim 1, characterised in that the nail shaft (24) is a pressed hollow member (25).

8. Metal staple according to Claim 1, characterised in that the nail shaft (24) has a tubular structure.

9. Metal staple according to Claim 7, characterised in that the nail shaft (24) constructed as a pressed hollow member (25) has a continuous slot (26) running over its entire length.

10. Metal staple according to Claim 1, characterised in that at the point (28) where it merges with the nail shaft (24), the clip (19) projects radially to the side over the nail shaft (24) at least in a limited area.

11. Metal staple according to Claim 1, characterised in that the nail shaft (24) is not smooth on its outside.

12. Metal staple according to Claim 11, characterised in that the nail shaft (24) bears a plurality of bulges (32) on its outside.

13. Metal staple according to Claim 12, characterised in that the bulges are formed by adjacent beads (32), which lie adjacent to one another along the length of at least one section of the shaft (24), arranged at equal distance from another, and extend in the peripheral direction of the shaft (24).

14. Metal staple according to Claim 12, characterised in that the bulges are formed by a plurality of outwardly projecting nubs, which are distributed at regular or irregular intervals and are punched out at least in one area of the shaft (24).

15. Metal staple according to Claim 12, characterised in that the bulges (32) are punched out areas.

16. Metal staple according to Claim 1, characterised in that the nail shaft (24) is provided with a blade at its end forming the tip (17).

17. Metal staple according to Claim 1, characterised in that the nail shaft (24) is pointed at its end (27) remote from the clip (19).

18. Metal staple according to Claim 17, characterised in that the tip (27) lies eccentrically in relation to the longitudinal axis of the nail shaft (24).

19. Metal staple according to Claim 1, characterised in that the holding section (9) has the structure of a rectangular plate.

20. Metal staple according to Claim 19, characterised in that the holding section (9) is connected to the section (8) provided for attachment of the flashing (2) integrally along the length of one of its long edges (16); and that the at least one clip (19) is provided on an opposing long edge (6).

21. Metal staple according to Claim 19, characterised in that the at least one clip (19) extends from a short side (17, 18) of the holding section (9).

22. Metal staple according to Claim 1, characterised in that the nail shaft (24) is held by an originally separate nail (34) with a head (41), nail shaft (24) and tip (38) which is undetachably held on the metal staple (1).

23. Metal staple according to Claim 22, characterised in that the respective corresponding clip (19) for mounting the nail (34) has a hole in which the nail shaft (24) of the nail (34) sits.

24. Metal staple according to Claim 23, characterised in that the width of the hole (35) in the respective clip (19) is smaller than the outside diameter of the nail shaft (24).

25. Metal staple according to Claim 24, characterised in that the hole (35) in the respective clip (19) is provided with incisions (37) on its edge, by means of which the hole (35) may be flexibly extended.

26. Metal staple according to Claims 23, 24 or 25, characterised in that the corresponding hole (31) in the holding section (9) is likewise smaller in diameter than the diameter of the nail shaft (24); and that the hole (31) is optionally provided with incisions (37) on its edge, by means of which the hole (31) may be elastically extended.

27. Metal staple according to Claim 23, characterised in that each clip (19) is curved in such a way that the hole (35) in the clip (19) and the corresponding hole (31) in the holding section (9) are coaxial to a straight line standing perpendicular on a plane defined by the holding section (9).

28. Metal staple according to Claim 1, characterised in that the clip (19) is provided with a predetermined breaking point (36).

29. Metal staple according to Claim 28, characterised in that the predetermined breaking point is formed by a lateral constriction (36) of the clip (19).

## Revendications

1. Elément de fixation (1) métallique pour la fixation de revêtements en métal, notamment de solins (2), sur des supports ou charpentes (3) en bois , comportant une partie de fixation (9) pour la fixation de l'élément de fixation (1) métallique sur la charpente (3), une partie (8) liée à la partie de fixation (9) destinée être amenée en prise par complémentarité de formes avec le revêtement (2) aux fins de tenir ledit revêtement (2) sur la charpente (3) en bois, au moins un trou (31) disposé dans la partie de fixation (9) et destiné au passage de la tige (24) d'une pointe de clouage enfoncée dans la charpente (3) en bois, ainsi qu'au moins une patte (19) qui est liée à la partie de fixation (9), est pliée ou peut être pliée en demi-cercle au-dessins de la surface plane et sert à tenir la pointe de clouage (24).

2. Elément de fixation métallique selon la revendication 1, caractérisé par le fait que la pointe de clouage (24) est liée de manière imperdable à la patte (19) .

3. Elément de fixation métallique selon la revendication 1, caractérisé par le fait qu'il est prévu deux pattes (19) qui portent chacune une pointe de clouage (24) ayant fonction de clou et liée de manière imperdable auxdites pattes.

4. Elément de fixation métallique selon la revendication 1, caractérisé par le fait que la tige (24) et la patte (19) sont liées entre elles pour former un ensemble monobloc.

5. Elément de fixation métallique selon la revendication 1, caractérisé par le fait que la patte (19) au nombre d'au moins une forme un ensemble monobloc avec la parie de fixation (9)

6. Elément de fixation métallique selon la revendication 1, caractérisé par le fait que, lorsque la patte (19) est dépliée et se trouve dans le même plan que la partie de fixation (9), la pointe de clouage (2) est orientée dans une direction opposée à la face par laquelle la partie de fixation (9) repose sur la charpente (3) au moment de la fixation du revêtement (2).

7. Elément de fixation métallique selon la revendication 1, caractérisé par le fait que la pointe de clouage (24) est un élément creux (25) préformé.

8. Elément de fixation métallique selon la revendication 1, caractérisé par le fait que la pointe de clouage (24) a une forme tubulaire.

9. Elément de fixation métallique selon la revendication 7, caractérisé par le fait que la pointe de clouage (24) agencée sous la forme d'un élément creux (25) préformé présente une fente (26) continue qui affecte l'ensemble de sa longueur.

10. Elément de fixation métallique selon la revendication 1, caractérisé par le fait que, dans sa partie de transition (28) avec la pointe de clouage (24), la patte (19), dans une zone limitée au moins, s'étend radialement sur le côté au-delà de la pointe de clouage (24).

11. Elément de fixation métallique selon la revendication 1, caractérisé par le fait que la pointe de clouage (24), sur sa face extérieure, n'est pas lisse.

12. Elément de fixation métallique selon la revendication 11, caractérisé par le fait que la pointe de clouage (24), sur sa face extérieure, porte une pluralité de renflements (32).

13. Elément de fixation métallique selon la revendication 12, caractérisé par le fait que les renflements sont constitués par des bourrelets (32) qui sont disposés les uns à côté des autres, à distance constante, le long d'au moins une partie de la pointe (24) et s'étendent dans la direction périphérique de ladite pointe de clouage (24).

14. Elément de fixation métallique selon la revendication 12, caractérisé par le fait que les renflements sont constitués par une pluralité de boutons qui sont répartis de manière régulière ou non, font saillie vers l'extérieur et sont formés par emboutissage dans une partie de la pointe (24).

15. Elément de fixation métallique selon la revendication 12, caractérisé par le fait que les renflements (32) sont des formes obtenues par emboutissage.

16. Elément de fixation métallique selon la revendication 1, caractérisé par le fait qu'à son extrémité (27) formant le bout pointu (17), la pointe de clouage (24) est pourvue d'une arête coupante.

17. Elément de fixation métallique selon la revendication 1, caractérisé par le fait qu'à son extrémité (27) éloignée de la patte (19), la pointe de clouage (24) est effilée.

18. Elément de fixation métallique selon la revendication 17, caractérisé par le fait que le bout pointu (27) est excentré par rapport à l'axe longitudinal de la pointe de clouage (24).

19. Elément de fixation métallique selon la revendication 1, caractérisé par le fait que la partie de fixation (9) a la forme d'une plaquette rectangulaire.

20. Elément de fixation métallique selon la revendication 19, caractérisé par le fait que la partie de fixation (9) est liée d'une pipe au niveau de l'un de ses grands côtés à la partie (8) servant à la mise en place du revêtement (2) et par le fait que la patte (19) au nombre d'au moins une est prévue sur un bord (6) situé en vis-à-vis.

21. Elément de fixation métallique selon la revendication 19, caractérisé par le fait que la patte (19) au nombre d'au moins une s'étend à partir d'un petit côte, (17, 18) de la partie de fixation (9).

22. Elément de fixation métallique selon la revendication 1, caractérisé par le fait que la pointe de clouage (24) est constituée d'un clou (34) séparé à l'origine, comportant une tête (41) une tige (24) et un bout pointu (38) qui est fixé de manière imperdable à l'élément de fixation métallique (1).

23. Elément de fixation métallique selon la revendication 22, caractérisé par le fait que la patte (19) associée comporte un trou pour tenir le clou (34), dans lequel pénètre la tige (24) dudit clou (34).

24. Elément de fixation métallique selon la revendication 23, caractérisé par le fait que le diamètre du trou (35) dans la patte (19) concernée est inférieur au diamètre extérieur de la pointe de clouage (24).

25. Elément de fixation métallique selon la revendication 24, caractérisé par le fait que le trou (35) dans la patte (19) concernée est pourvu, sur son bord, d'entailles qui permettent d'élargir de manière élastique ledit trou (35).

26. Elément de fixation métallique selon la revendication 23, 24 ou 25, caractérisé par le fait que le trou (31) associé dans la partie de fixation (9) a également un diamètre qui est inférieur au diamètre de la tige (24) de la pointe de clouage et par le fait que, le cas échéant, le trou (31) est pourvu sur son bord, d'entailles qui permettent d'élargir de manière élastique ledit trou (31).

27. Elément de fixation métallique selon la revendication 23, caractérisé par le fait que chaque patte (19) est pliée de manière telle que le trou (35) dans la patte (19) et le trou (31) dans la partie de fixation (9) soient coaxiaux avec une droite qui est perpendiculaire à un plan défini par la partie de fixation (9).

28. Elément de fixation métallique selon la revendication 1, caractérisé par le fait que la patte (19) présente un point (36) de pliage.

29. Elément de fixation métallique selon la revendication 28, caractérisé par le fait que le point de pliage est constitué par un rétrécissement (36) latéral de la patte (19).
